# EUROPÄISCHE PATENTSCHRIFT

(11) **EP 3 990 315 B1**
(45) Veröffentlichungstag und Bekanntmachung des Hinweises auf die Patenterteilung: **09.08.2023**
(21) Anmeldenummer: 20734897.0
(22) Anmeldetag: 24.06.2020
(51) Int. Cl.: B60R 21/216, B60R 21/203, B60R 21/215

(54) **FAHRERGASSACKMODUL SOWIE LENKVORRICHTUNG MIT EINEM SOLCHEN FAHRERGASSACKMODUL**
DRIVER AIRBAG MODULE AND STEERING DEVICE COMPRISING SUCH A DRIVER AIRBAG MODULE
MODULE DE COUSSIN GONFLABLE POUR CONDUCTEUR ET DISPOSITIF DE DIRECTION COMPRENANT UN MODULE DE COUSSIN GONFLABLE POUR CONDUCTEUR DE CE TYPE

(30) Priorität: 27.06.2019 DE 202019103552 U
(43) Veröffentlichungstag der Anmeldung: 04.05.2022
(73) Patentinhaber: ZF Automotive Safety Germany GmbH, 63743 Aschaffenburg (DE)
(72) Erfinder: VON RODEN, Constantin, 63791 Karlstein (DE); MORHART, Johannes, 63762 Großostheim (DE)
(74) Vertreter: ZF Patentabteilung - DIPS
(86) Internationale Anmeldenummer: PCT/EP2020/067647
(87) Internationale Veröffentlichungsnummer: WO 2020/260364

(56) Entgegenhaltungen:
- EP-A2- 1 357 001
- WO-A1-2005/044643
- DE-A1-102017 120 770
- DE-C1- 10 150 772
- DE-U1- 20 114 375
- JP-A- 2000 264 158

## Beschreibung

Die Erfindung betrifft ein Fahrergassackmodul zur Montage an einer um eine Lenkachse drehbaren Lenkvorrichtung, umfassend einen aufblasbaren Gassack und ein Modulgehäuse mit einer zur Lenkachse im Wesentlichen parallelen Gehäuseachse, welches einen Aufnahmeraum für den gefalteten Gassack definiert, wobei der Aufnahmeraum begrenzt ist durch eine Gehäusefrontwand, die im montierten Zustand des Fahrergassackmoduls einem Fahrzeuginsassen zugewandt ist, eine axial beabstandete, gegenüberliegende Gehäuserückwand sowie eine Gehäuseseitenwand, welche sich zwischen der Gehäusefrontwand und der Gehäuserückwand erstreckt, wobei die Gehäuseseitenwand einen Öffnungsabschnitt aufweist, über den sich der Gassack bei einer Aktivierung des Fahrergassackmoduls entfaltet. Darüber hinaus betrifft die Erfindung auch eine Lenkvorrichtung, insbesondere ein Fahrzeuglenkrad, mit einem solchen Fahrergassackmodul.

Fahrerseitige Frontgassackmodule zur Insassenrückhaltung sind derzeit gewöhnlich im Bereich der Lenkradnabe untergebracht, wobei der Gassack bei einer Modulaktivierung üblicherweise durch eine dem Insassen zugewandte Gehäusefrontwand aus dem Modulgehäuse austritt und sich in Richtung zum Insassen hin entfaltet. Der zentral im Sichtfeld des Fahrers gelegene Nabenbereich des Lenkrads ist bisher weitgehend ungenutzt, um ein problemloses Aufbrechen der Gehäusefrontwand und eine gewünschte Gassackentfaltung zu gewährleisten.

Inzwischen gibt es jedoch Bestrebungen, diesen zentralen Nabenbereich des Lenkrads beispielsweise für Anzeige- und/oder Eingabevorrichtungen wie etwa einen berührungssensitiven Bildschirm zu nutzen. In der DE 10 2017 120 770 A1 ist daher bereits ein Fahrergassackmodul nach dem Oberbegriff von Anspruch 1 offenbart, bei dem der Gassack im Falle einer Modulaktivierung nicht durch die dem Insassen zugewandte Frontseite, sondern durch eine von der Frontseite unterschiedliche Außenseite aus dem Modulgehäuse austritt. Folglich kann an der Frontseite des Gassackmoduls in diesem Fall eine Anzeige- und/oder Eingabevorrichtung angeordnet werden.

Mit solch einem seitlichen Austritt des Gassacks aus dem Modulgehäuse sind allerdings neue Herausforderungen verbunden, um eine gewünschte Entfaltung des Gassacks und damit einen besonders wirkungsvollen Insassenschutz zu gewährleisten.

Die EP 1 357 001 A2 beschreibt ein Beifahrergassackmodul mit einer Modulklappe, welche eine Öffnung in der Instrumententafel verschließt und beweglich am Modulgehäuses befestigt ist. Über eine Kappenbefestigung mittels geeigneter Seitenelemente, Führungselemente und/oder Scharnierelemente wird nach einer Modulaktivierung erreicht, dass die Modulklappe zunächst in eine erste Richtung und anschließend in eine zweite Richtung ausfährt, um eine gewünschte Entfaltung des Beifahrergassacks durch die Öffnung der Instrumententafel zu ermöglichen.

Aufgabe der Erfindung ist die Schaffung eines Fahrergassackmoduls mit einem seitlich aus dem Modulgehäuse austretenden Gassack, wobei der Gassack ein gewünschtes, also insbesondere ein rasches, vordefiniertes und zuverlässig reproduzierbares Entfaltungsverhalten aufweist.

Erfindungsgemäß wird diese Aufgabe gelöst durch ein Fahrergassackmodul der eingangs genannten Art, bei dem die Gehäusefrontwand relativ zur Gehäuserückwand geneigt ist. Vorzugsweise sind dabei die Gehäusefrontwand und/oder die Gehäuserückwand, zumindest auf der dem gefalteten Gassackpaket zugewandten Seite, jeweils im Wesentlichen eben ausgebildet. Bei einer Aktivierung des Fahrergassackmoduls entsteht im Aufnahmeraum des Modulgehäuses ein zunehmender Gasdruck. Die daraus resultierende Entfaltungskraft des Gassacks lässt sich durch die Neigung der Gehäusefrontwand relativ zur Gehäuserückwand mit geringem Aufwand gezielt in eine gewünschte Richtung, insbesondere in eine Richtung zum Öffnungsabschnitt der Gehäuseseitenwand hinlenken und verstärken. Dies führt dann zu einem frühzeitigen Austritt des Gassacks aus dem Öffnungsabschnitt des Gassackgehäuses und folglich zu einer besonders raschen Gassackentfaltung.

Dabei weist der Aufnahmeraum für den gefalteten Gassack gemäß der Erfindung im Bereich des Öffnungsabschnitts der Gehäuseseitenwand seine größte axiale Abmessung und an der Gehäuseseitenwand gegenüber des Öffnungsabschnitts seine kleinste axiale Abmessung auf. Bei einer Aktivierung des Gassackmoduls wird dadurch die Entfaltungskraft des Gassacks besonders effektiv in Richtung zum Öffnungsabschnitt hingelenkt.

Gemäß einer Ausführungsform des Fahrergassackmoduls ist die Gehäusefrontwand relativ zur Gehäuserückwand um wenigstens 10°, insbesondere um etwa 15° bis 20° geneigt, wobei sich die Gehäuserückwand vorzugsweise im Wesentlichen senkrecht zur Gehäuseachse erstreckt. Eine nennenswerte Lenkung der Gassackentfaltungskraft und damit ein spürbarer Effekt auf die Gassackentfaltung setzt erst bei Neigungswinkeln ab etwa 10° ein. Große Neigungswinkel führen hingegen zu einem unerwünscht großen Bauraumbedarf, insbesondere in axialer Richtung, weshalb die Neigungswinkel bevorzugt kleiner als 40°, und besonders bevorzugt kleiner als 30° gewählt werden.

Auf einer vom gefalteten Gassack abgewandten Seite der Gehäusefrontwand ist vorzugsweise ein Abstandshalter zur Befestigung einer Modulabdeckung oder einer Anzeige- und/oder Eingabevorrichtung angeordnet. Der Abstandshalter ist bevorzugt keilförmig ausgebildet, um beispielsweise die Neigung der Gehäusefrontwand auszugleichen und eine optimale Position für die Anzeige- und/oder Eingabevorrichtung bzw. die Modulabdeckung zu erreichen. In einigen Ausführungsvarianten ist der Keilwinkel des Abstandshalters zur individuellen Positionsanpassung der Anzeige- und/oder Eingabevorrichtung durch den Insassen variabel einstellbar. Ferner kann in dem keilförmigen Abstandshalter ein Hohlraum zur Aufnahme elektrischer Bauteile für die Anzeige- und/oder Eingabevorrichtung vorgesehen sein.

Gemäß einer bevorzugten Ausführungsform des Fahrergassackmoduls ist der Öffnungsabschnitt der Gehäuseseitenwand als schwenkbare Klappe ausgeführt, insbesondere wobei die Klappe gehäuserückwandseitig schwenkbar gelagert und gehäusefrontwandseitig zwischen einer Schließstellung und einer Offenstellung radial bewegbar ist. Durch eine solche Klappe wird der Gassack bei seiner Entfaltung in eine gewünschte Hauptentfaltungsrichtung gelenkt, beispielsweise zwischen einer Lenkradnabe und einem Lenkradkranz hindurch zum Insassen hin.

Vorzugsweise grenzt in dieser Ausführungsform eine gehäusefrontwandseitige Klappenkante an eine klappenseitige Gehäusekante der Gehäusefrontwand an, wobei die Klappenkante und/oder die Gehäusekante abgerundet sind, insbesondere wobei ein Rundungsradius der Klappen- bzw. Gehäusekante wenigstens 2 mm, bevorzugt etwa 5 mm beträgt. Mit Bezug auf den Aufnahmeraum erfolgt die Abrundung der Kanten insbesondere nach außen, das heißt vom Aufnahmeraum weg. Dadurch wird eine Beschädigung des Gassacks beim Austritt aus dem Aufnahmeraum mit geringem Aufwand zuverlässig verhindert.

Ferner kann das Modulgehäuse einen Anschlag für die Klappe der Gehäuseseitenwand aufweisen, wobei der Anschlag einen maximalen Schwenkwinkel der Klappe in ihrer Offenstellung definiert. Ausgehend von einer Schließstellung der Klappe liegt der maximale Schwenkwinkel bevorzugt in einer Größenordnung von 30° bis 60°.

Die Erfindung betrifft im Übrigen auch eine Lenkvorrichtung, insbesondere ein Fahrzeuglenkrad, mit einem Griffabschnitt zur manuellen Betätigung der Lenkvorrichtung, der um eine Lenkachse drehbar ist, einem Nabenabschnitt, der radial einwärts des Griffabschnitts angeordnet ist, sowie einem Speichenabschnitt, der den Griffabschnitt und den Nabenabschnitt verbindet, wobei am Nabenabschnitt der Lenkvorrichtung ein oben beschriebenes Fahrergassackmodul montiert ist.

Der Nabenabschnitt kann angrenzend an die Gehäuseseitenwand des Fahrergassackmoduls eine Lenkvorrichtungswand aufweisen, in der lineare Schwächungszonen ausgebildet sind, welche sich insbesondere entlang von in Umfangsrichtung entgegengesetzten Seitenrändern der Klappe erstrecken. Vorzugsweise erstreckt sich die insbesondere aus einem geschäumten Kunststoffmaterial hergestellte Lenkvorrichtungswand genau wie die Gehäuseseitenwand im Wesentlichen in axialer Richtung, sodass auch die linearen Schwächungszonen im Wesentlichen axial ausgerichtet sind.

Ferner ist bevorzugt, dass die schwenkbare Klappe in ihrer Offenstellung einen maximalen Schwenkwinkel einnimmt und der Griffabschnitt ein umlaufender Lenkradkranz ist, wobei die in Umfangsrichtung gegenüberliegenden Seitenränder der Klappe jeweils entlang einer Geraden verlaufen und der maximale Schwenkwinkel so gewählt ist, dass sich die beiden Geraden durch den umlaufenden Lenkradkranz hindurch erstrecken. Insbesondere kann der Lenkradkranz dabei von den beiden Geraden jeweils in einem Berührpunkt tangiert werden.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 einen Schnitt durch ein erfindungsgemäßes Fahrergassackmodul in seiner Schließstellung;
- Figur 2 einen Schnitt durch das Fahrergassackmodul gemäß Figur 1 in seiner Offenstellung;
- Figur 3 einen weiteren Schnitt durch das Fahrergassackmodul gemäß Figur 1 in seiner Offenstellung;
- Figur 4 eine Draufsicht auf eine erfindungsgemäße Lenkvorrichtung mit einem erfindungsgemäßen Fahrergassackmodul in seiner Schließstellung;
- Figur 5 einen Schnitt V-V durch die Lenkvorrichtung gemäß Figur 4;
- Figur 6 einen Schnitt VI-VI durch einen Nabenbereich der Lenkvorrichtung gemäß Figur 5;
- Figur 7 eine Seitenansicht S der Lenkvorrichtung gemäß Figur 5;
- Figur 8 eine Draufsicht auf die Lenkvorrichtung gemäß Figur 4 mit einem erfindungsgemäßen Fahrergassackmodul in seiner Offenstellung; und
- Figur 9 einen Schnitt IX-IX durch die Lenkvorrichtung gemäß Figur 8.

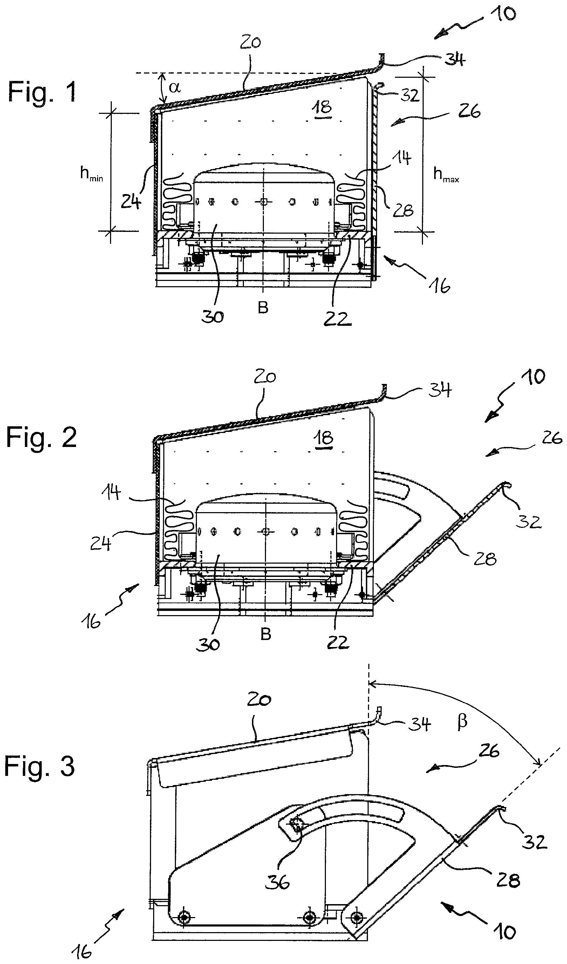

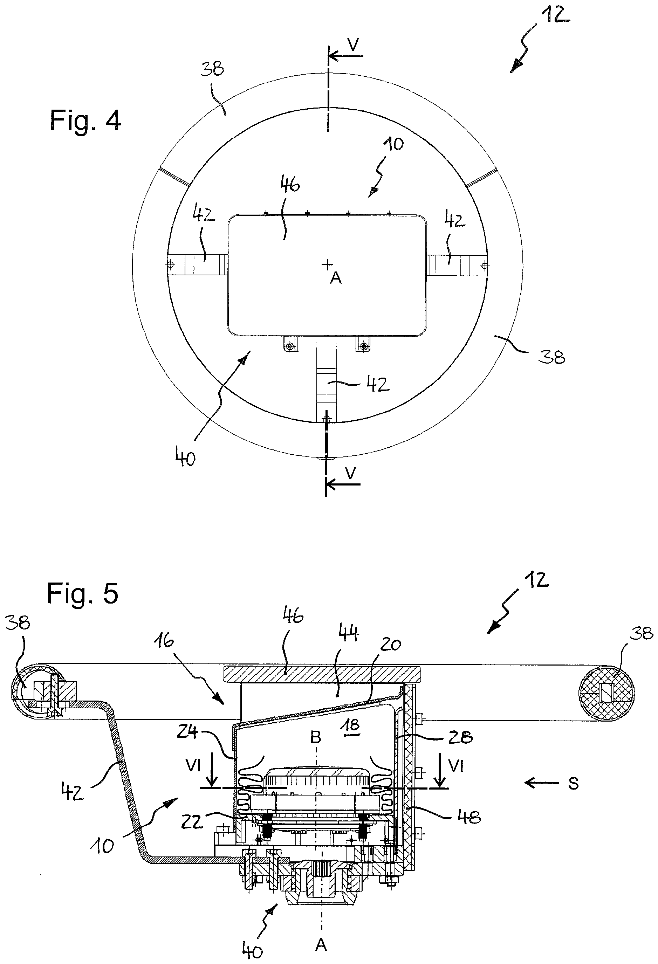

Die Figuren 1 bis 3 zeigen ein Fahrergassackmodul 10 zur Montage an einer um eine Lenkachse A drehbaren Lenkvorrichtung 12 (siehe zum Beispiel Figur 5). Das Fahrergassackmodul 10 umfasst einen aufblasbaren Gassack 14 sowie ein Modulgehäuse 16 mit einer zur Lenkachse A im Wesentlichen parallelen Gehäuseachse B, welches einen Aufnahmeraum 18 für den gefalteten Gassack 14 definiert, wobei der Aufnahmeraum 18 begrenzt ist durch eine Gehäusefrontwand 20, die im montierten Zustand des Fahrergassackmoduls 10 einem Fahrzeuginsassen zugewandt ist, eine axial beabstandete, gegenüberliegende Gehäuserückwand 22 und eine umlaufende Gehäuseseitenwand 24, welche sich zwischen der Gehäusefrontwand 20 und der Gehäuserückwand 22 erstreckt, wobei die Gehäuseseitenwand 24 einen Öffnungsabschnitt 26 aufweist, über den sich der Gassack 14 bei einer Aktivierung des Fahrergassackmoduls 10 entfaltet.

Der Öffnungsabschnitt 26 der Gehäuseseitenwand 24 ist im dargestellten Ausführungsbeispiel als schwenkbare Klappe 28 ausgeführt, wobei die Klappe 28 gehäuserückwandseitig schwenkbar am Modulgehäuse 16 gelagert und gehäusefrontwandseitig radial zwischen einer Schließstellung gemäß Figur 1 und einer Offenstellung gemäß den Figuren 2 und 3 bewegbar ist.

Ferner umfasst das Fahrergassackmodul 10 einen Gasgenerator 30, der zumindest teilweise im Modulgehäuse 16 aufgenommen ist und den gefalteten Gassack 14 bei einer Aktivierung des Fahrergassackmoduls 10 aufbläst. Durch den bei einer Generatorauslösung steigenden Gasdruck und die daraus resultierende, zunehmende Entfaltungskraft des Gassacks 14 im Aufnahmeraum 18 wird die Klappe 28 von ihrer Schließstellung in ihrer Offenstellung bewegt, sodass der Gassack 14 über den Öffnungsabschnitt 26 aus dem Aufnahmeraum 18 austreten und sich in Richtung zu einem Insassen entfalten kann.

Um die Entfaltungskraft des Gassacks 14 auf die Klappe 28 zu verstärken und damit die Klappenöffnung sowie die Gassackentfaltung zu beschleunigen, ist die Gehäusefrontwand 20 relativ zur Gehäuserückwand 22 so geneigt, dass der Aufnahmeraum 18 für den gefalteten Gassack 14 im Bereich der Klappe 28 seine größte axiale Abmessung hₘₐₓ und gegenüber der Klappe 28 seine kleinste axiale Abmessung hₘᵢₙ aufweist.

Ein Neigungswinkel α zwischen der im Wesentlichen ebenen Gehäusefrontwand 20 und der im Wesentlichen ebenen Gehäuserückwand 22 beträgt wenigstens 10°, wobei insbesondere gilt: 10° ≤ α ≤ 30°.

Eine gehäusefrontwandseitige Klappenkante 32 grenzt in der Schließstellung der Klappe 28 an eine klappenseitige Gehäusekante 34 der Gehäusefrontwand 20 an, wobei die Kanten einen Spalt ausbilden oder miteinander in Kontakt stehen können. Gemäß Figur 1 sind sowohl die Klappenkante 32 als auch die Gehäusekante 34 jeweils nach außen, das heißt vom Aufnahmeraum 18 weg, abgerundet. Ein Rundungsradius beträgt dabei wenigstens 2 mm, im dargestellten Ausführungsbeispiel etwa 5°mm.

Die Figur 3 veranschaulicht beispielhaft und schematisch eine Klappenkonstruktion des Fahrergassackmoduls 10, wobei das Modulgehäuse 16 einen Anschlag 36 für die Klappe 28 der Gehäuseseitenwand 24 aufweist. Ausgehend von der Schließstellung der Klappe 28 wird ein maximaler Klappen-Schwenkwinkel β in der durch den Anschlag 36 definierten Offenstellung der Klappe 28 erreicht und liegt bevorzugt in der Größenordnung von 30° bis 60°.

In den Figuren 4 bis 7 ist eine Lenkvorrichtung 12 für ein Fahrzeug mit einem oben beschriebenen Fahrergassackmodul 10 in seiner Schließstellung dargestellt.

Die Lenkvorrichtung 12 ist konkret als Fahrzeuglenkrad ausgeführt und umfasst einen Griffabschnitt 38 zur manuellen Betätigung der Lenkvorrichtung 12, der um die Lenkachse A drehbar ist, einen Nabenabschnitt 40, der radial einwärts des Griffabschnitts 38 angeordnet ist, sowie einen Speichenabschnitt 42, der den Griffabschnitt 38 und den Nabenabschnitt 40 verbindet, wobei das Fahrergassackmodul 10 so am Nabenabschnitt 40 der Lenkvorrichtung 12 montiert ist, dass die Gehäuserückwand 22 des Modulgehäuses 16 an den Nabenabschnitt 40 angrenzt.

Auf einer vom gefalteten Gassack 14 abgewandten Seite der Gehäusefrontwand 20 ist gemäß Figur 5 ein keilförmiger Abstandshalter 44 angeordnet, an dem im dargestellten Ausführungsbeispiel eine als berührungssensitiver Bildschirm ausgebildete Anzeige- und/oder Eingabevorrichtung 46 befestigt ist.

Der keilförmige Abstandshalter 44 gleicht im vorliegenden Fall die Neigung der Gehäusefrontwand 20 aus, sodass sich die Anzeige- und/oder Eingabevorrichtung 46 im Wesentlichen senkrecht zur Gehäuseachse B erstreckt, wobei durch die Geometrie des Abstandshalters 44 generell jede gewünschte Positionierung der Anzeige- und/oder Eingabevorrichtung 46 realisierbar ist. Gemäß einer speziellen Ausführungsvariante des Fahrergassackmoduls 10 ist der Abstandshalter insbesondere einstückig mit der Gehäusefrontwand 20 des Modulgehäuses 16 ausgebildet.

Der Abstandshalter 44 ist hinreichend stabil ausgeführt, um bei einer Modulaktivierung eine Durchbiegung der Gehäusefrontwand 20 infolge des im Aufnahmeraum 18 ansteigenden Gasdrucks zu verhindern oder zumindest gering zu halten. Ferner kann im Abstandshalter 44 ein Hohlraum vorgesehen sein, beispielsweise zur Aufnahme elektrischer Bauteile der Anzeige- und/oder Eingabevorrichtung 46.

Im dargestellten Ausführungsbeispiel ist zumindest der Abstandshalter 44, optional auch die Anzeige- und/oder Eingabevorrichtung 46, am Modulgehäuse 16 vormontiert und wird dann zusammen mit dem Fahrergassackmodul 10 am Nabenabschnitt 40 der Lenkvorrichtung 12 befestigt.

Alternativ ist selbstverständlich auch denkbar, dass der Abstandshalter 44 sowie die Anzeige- und/oder Eingabevorrichtung 46 erst nach einer Befestigung des Fahrergassackmoduls 10 am Nabenabschnitt 40 der Lenkvorrichtung 12 als separate Bauteile oder als Baugruppe entweder am Modulgehäuse 16 oder an der Lenkvorrichtung 12 montiert werden.

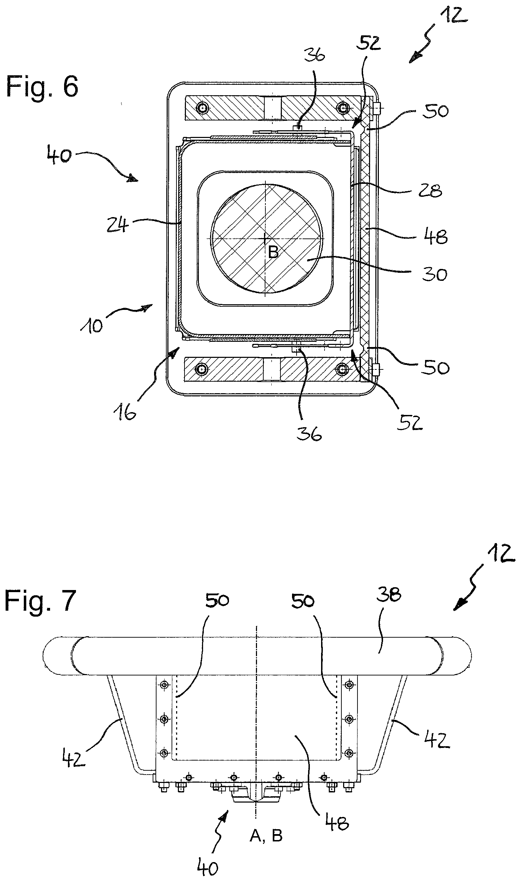

Die Figur 6 zeigt einen Teilschnitt VI-VI durch die Lenkvorrichtung 12 und verdeutlicht, dass der Nabenabschnitt 40 angrenzend an die Gehäuseseitenwand 24 des Fahrergassackmoduls 10 eine Lenkvorrichtungswand 48 aufweist, in der lineare Schwächungszonen 50 ausgebildet sind, welche sich entlang von in Umfangsrichtung entgegengesetzten Seitenrändern 52 der Klappe 28 erstrecken. Die mit Bezug auf die Gehäuseachse B in Umfangsrichtung umlaufende Gehäuseseitenwand 24 des Fahrergassackmoduls 10 weist hier einen rechteckigen Querschnitt mit vier im Wesentlichen ebenen Seitenwandabschnitten auf, wobei einer der Seitenwandabschnitte als schwenkbare Klappe 28 ausgeführt ist und den Öffnungsabschnitt 26 des Modulgehäuses 16 definiert.

Im dargestellten Ausführungsbeispiel weist die Lenkvorrichtung 12 ein Metallskelett auf, welches unter anderem im Bereich des Griffabschnitts 38 mit einem Kunststoff umschäumt ist. Dementsprechend ist auch die Lenkvorrichtungswand 48 vorzugsweise eine Schaumwand aus dem geschäumten Kunststoff und wird direkt beim Umschäumen des Metallskeletts an den Nabenabschnitt 40 der Lenkvorrichtung 12 angeformt.

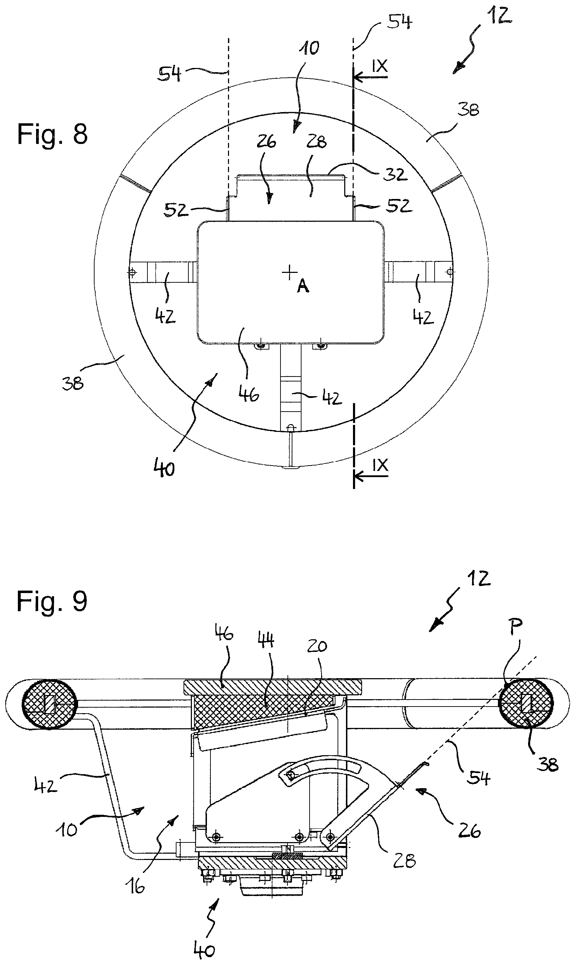

Die Figuren 8 und 9 zeigen die Lenkvorrichtung 12 gemäß den Figuren 4 bis 7 mit dem Fahrergassackmodul 10 in seiner Offenstellung.

Das am Nabenabschnitt 40 der Lenkvorrichtung 12 montierte Fahrergassackmodul 10 ist dabei in Umfangsrichtung so positioniert, dass sich die Klappe 28 bzw. der dadurch definierte Öffnungsabschnitt 26 in einer in Figur 8 dargestellten Neutralstellung der Lenkvorrichtung 12 für Geradeausfahrt etwa in einer "12-Uhr-Position" befindet (also oben, gemäß Figur 8). Im Bereich um die 12-Uhr-Position sind vorzugsweise keine Speichenabschnitte 42 vorgesehen, sodass sich der Gassack 14 bei einer Modulaktivierung ungehindert zwischen dem Nabenabschnitt 40 und dem Griffabschnitt 38 hindurch in Richtung zu einem Insassen hin entfalten kann.

Gemäß der vorliegenden Ausführungsform der Lenkvorrichtung 12 ist der Griffabschnitt 38 als umlaufender Lenkradkranz ausgebildet. In ihrer Offenstellung gemäß den Figuren 8 und 9 nimmt die schwenkbare Klappe 28 den maximalen Schwenkwinkel β ein, wobei die gegenüberliegenden Seitenränder 52 der Klappe 28 jeweils entlang einer Geraden 54 verlaufen und der maximale Schwenkwinkel β so gewählt ist, dass sich die beiden Geraden 54 durch den umlaufenden Lenkradkranz hindurch erstrecken und den Lenkradkranz insbesondere in einem Berührpunkt P tangieren. Auf diese Weise wird durch die geneigte Gehäusefrontwand 20 und die maximal ausgeschwenkte Klappe 28 eine Art Entfaltungskanal für den Gassack 14 vorgegeben, der eine besonders rasche und ungehinderte Gassackentfaltung zwischen dem Nabenabschnitt 40 und dem Griffabschnitt 38 der Lenkvorrichtung 12 hindurch in Richtung zum Insassen ermöglicht. Die Modulabdeckung bzw. die Anzeige- und/ oder Eingabevorrichtung 46 verbleiben nach der Modulaktivierung stationär am Nabenabschnitt 40 der Lenkvorrichtung 12 fixiert und werden nach der vollständigen Gassackentfaltung durch den Gassack 14 abgedeckt, um einen Kontakt mit dem Insassen zu vermeiden.

## Patentansprüche

1. Fahrergassackmodul zur Montage an einer um eine Lenkachse (A) drehbaren Lenkvorrichtung (12), umfassend
einen aufblasbaren Gassack (14) und
ein Modulgehäuse (16) mit einer zur Lenkachse (A) im Wesentlichen parallelen Gehäuseachse (B), welches einen Aufnahmeraum (18) für den gefalteten Gassack (14) definiert,
wobei der Aufnahmeraum (18) begrenzt ist durch eine Gehäusefrontwand (20), die im montierten Zustand des Fahrergassackmoduls (10) einem Fahrzeuginsassen zugewandt ist, eine axial beabstandete, gegenüberliegende Gehäuserückwand (22) sowie eine Gehäuseseitenwand (24), welche sich zwischen der Gehäusefrontwand (20) und der Gehäuserückwand (22) erstreckt,
wobei die Gehäuseseitenwand (24) einen Öffnungsabschnitt (26) aufweist, über den sich der Gassack (14) bei einer Aktivierung des Fahrergassackmoduls (10) entfaltet,
**dadurch gekennzeichnet, dass** die Gehäusefrontwand (20) relativ zur Gehäuserückwand (22) so geneigt ist, dass der Aufnahmeraum (18) für den gefalteten Gassack (14) im Bereich des Öffnungsabschnitts (26) seine größte axiale Abmessung (hₘₐₓ) und gegenüber des Öffnungsabschnitts (26) seine kleinste axiale Abmessung (hₘᵢₙ) aufweist.

2. Fahrergassackmodul nach Anspruch 1, **dadurch gekennzeichnet, dass** die Gehäusefrontwand (20) relativ zur Gehäuserückwand (22) um einen Neigungswinkel (α) von wenigstens 10° geneigt ist, wobei insbesondere gilt: 10° ≤ α ≤ 30°.

3. Fahrergassackmodul nach einem der vorhergehenden Ansprüche, **dadurch gekennzeichnet, dass** auf einer vom gefalteten Gassack (14) abgewandten Seite der Gehäusefrontwand (20) ein Abstandshalter (44) zur Befestigung einer Modulabdeckung oder einer Anzeige- und/oder Eingabevorrichtung (46) angeordnet ist.

4. Fahrergassackmodul nach einem der vorhergehenden Ansprüche, **dadurch gekennzeichnet, dass** der Öffnungsabschnitt (26) der Gehäuseseitenwand (24) als schwenkbare Klappe (28) ausgeführt ist, insbesondere wobei die Klappe (28) gehäuserückwandseitig schwenkbar gelagert und gehäusefrontwandseitig zwischen einer Schließstellung und einer Offenstellung radial bewegbar ist.

5. Fahrergassackmodul nach Anspruch 4, **dadurch gekennzeichnet, dass** eine gehäusefrontwandseitige Klappenkante (32) an eine klappenseitige Gehäusekante (34) der Gehäusefrontwand (20) angrenzt, wobei die Klappenkante (32) und/oder die Gehäusekante (34) abgerundet sind, insbesondere wobei ein Rundungsradius wenigstens 2 mm beträgt.

6. Fahrergassackmodul nach Anspruch 4 oder 5, **dadurch gekennzeichnet, dass** das Modulgehäuse (16) einen Anschlag (36) für die Klappe (28) der Gehäuseseitenwand (24) aufweist, wobei der Anschlag (36) einen maximalen Schwenkwinkel (β) der Klappe (28) in ihrer Offenstellung definiert.

7. Lenkvorrichtung für ein Fahrzeug, insbesondere Fahrzeuglenkrad, mit
einem Griffabschnitt (38) zur manuellen Betätigung der Lenkvorrichtung (12), der um eine Lenkachse (A) drehbar ist,
einem Nabenabschnitt (40), der radial einwärts des Griffabschnitts (38) angeordnet ist, sowie
einem Speichenabschnitt (42), der den Griffabschnitt (38) und den Nabenabschnitt (40) verbindet,
**gekennzeichnet durch** ein Fahrergassackmodul (10) nach einem der Ansprüche 4 bis 6, das am Nabenabschnitt (40) der Lenkvorrichtung (12) montiert ist.

8. Lenkvorrichtung nach Anspruch 7, **dadurch gekennzeichnet, dass** der Nabenabschnitt (40) angrenzend an die Gehäuseseitenwand (24) des Fahrergassackmoduls (10) eine Lenkvorrichtungswand (48) aufweist, in der lineare Schwächungszonen (50) ausgebildet sind, welche sich insbesondere entlang von in Umfangsrichtung entgegengesetzten Seitenrändern (52) der Klappe (28) erstrecken.

9. Lenkvorrichtung nach Anspruch 7 oder 8, **dadurch gekennzeichnet, dass** die schwenkbare Klappe (28) in ihrer Offenstellung einen maximalen Schwenkwinkel (β) einnimmt und der Griffabschnitt (38) ein umlaufender Lenkradkranz ist, wobei die gegenüberliegenden Seitenränder (52) der Klappe (28) jeweils entlang einer Geraden (54) verlaufen und der maximale Schwenkwinkel (β) so gewählt ist, dass sich die beiden Geraden (54) durch den umlaufenden Lenkradkranz hindurch erstrecken.

## Claims

1. A driver airbag module for installing on a steering device (12) which can be rotated about a steering axis (A), comprising
an inflatable airbag (14) and
a module housing (16) with a housing axis (B) which is substantially parallel to the steering axis (A), said module housing defining a receiving chamber (18) for the folded airbag (14),
wherein the receiving chamber (18) is delimited by a housing front wall (20) which faces a vehicle occupant when the driver airbag module (10) is installed, an opposing housing rear wall (22) which is axially spaced therefrom, and a housing lateral wall (24) which extends between the housing front wall (20) and the housing rear wall (22),
wherein the housing lateral wall (24) has an opening section (26) via which the airbag (14) deploys when the driver airbag module (10) is activated,
**characterized in that** the housing front wall (20) is inclined relative to the housing rear wall (22) such that the receiving chamber (18) for the folded airbag (14) in the area of the opening section (26) has its maximum axial dimension (hₘₐₓ) and opposed to the opening section (26) has its minimum axial dimension (hₘᵢₙ).

2. The driver airbag module according to claim 1, **characterized in that** the housing front wall (20) is inclined relative to the housing rear wall (22) by an angle of inclination (α) of at least 10°, wherein particularly: 10° ≤ α ≤ 30°.

3. The driver airbag module according to any one of the preceding claims, **characterized in that** a spacer (44) for fastening a module cover or a display and/or input device (46) is disposed on a side of the housing front wall (20) remote from the folded airbag (14).

4. The driver airbag module according to any one of the preceding claims, **characterized in that** the opening section (26) of the housing lateral wall (24) is a pivoting door (28), in particular wherein the door (28) is pivoted on the housing rear wall side and is radially movable between a closing position and an open position on the housing front wall side.

5. The driver airbag module according to claim 5, **characterized in that** a housing front wall side door edge (32) abuts on a door-side housing edge (34) of the housing front wall (20), the door edge (32) and/or the housing edge (34) being rounded, in particular wherein a rounding radius amounts to at least 2 mm.

6. The driver airbag module according to claim 5 or 6, **characterized in that** the module housing (16) includes a limit stop (36) for the door (28) of the housing lateral wall (24), the limit stop (36) defining a maximum pivot angle (β) of the door (28) in its open position.

7. A steering device for a vehicle, in particular vehicle steering wheel, comprising
a grip portion (38) for manually operating the steering device (12) which can be rotated about a steering axis (A),
a hub portion (40) disposed radially inwardly from the grip portion (38), and
a spoke portion (42) interconnecting the grip portion (38) and the hub portion (40),
**characterized by** a driver airbag module (10) according to any one of the claims 4 to 6 which is installed on the hub portion (40) of the steering device (12).

8. The steering device according to claim 7, **characterized in that**, adjacent to the housing lateral wall (24) of the driver airbag module (10), the hub portion (40) includes a steering device wall (48) in which linear weakening zones (50) extending especially along lateral edges (52) of the door (28) opposed in the circumferential direction are formed.

9. The steering device according to claim 7 or 8, **characterized in that** the pivoting door (28) in its open position adopts a maximum pivot angle (β) and the grip portion (38) is a peripheral steering wheel rim, wherein each of the opposing lateral edges (52) of the door (28) extends along a straight line (54) and the maximum pivot angle (β) is selected such that the two straight lines (54) extend through the peripheral steering wheel rim.

## Revendications

1. Module airbag pour conducteur destiné à être monté sur un dispositif de direction (12) pouvant tourner autour d'un axe de direction (A), comprenant
un coussin gonflable (14) et
un boîtier de module (16) avec un axe de boîtier (B) essentiellement parallèle à l'axe de direction (A), lequel définit un espace de réception (18) pour le coussin gonflable (14) plié,
pour lequel l'espace de réception (18) est délimité par une paroi frontale du boîtier (20) qui, à l'état monté du module airbag pour conducteur (10), est tournée vers un occupant du véhicule, une paroi arrière du boîtier (22) opposée, espacée axialement, ainsi qu'une paroi latérale du boîtier (24) qui s'étend entre la paroi frontale du boîtier (20) et la paroi arrière du boîtier (22),
pour lequel la paroi latérale du boîtier (24) présente une section d'ouverture (26) par laquelle le coussin gonflable (14) se déploie lors d'une activation du module airbag pour conducteur (10),
**caractérisé en ce que** la paroi frontale du boîtier (20) est inclinée par rapport à la paroi arrière de boîtier (22) de telle sorte que l'espace de réception (18) pour le coussin gonflable (14) plié présente sa plus grande dimension axiale (hₘₐₓ) dans la zone de la section d'ouverture (26) et sa plus petite dimension axiale (hₘᵢₙ) en face de la section d'ouverture (26).

2. Module airbag pour conducteur selon la revendication 1, **caractérisé en ce que** la paroi avant du boîtier (20) est inclinée par rapport à la paroi arrière du boîtier (22) d'un angle d'inclinaison (α) d'au moins 10°, pour lequel notamment 10° ≤ α ≤ 30° s'applique.

3. Module airbag pour conducteur selon l'une des revendications précédentes, **caractérisé en ce que** sur un côté de la paroi frontale du boîtier (20) opposé au coussin gonflable (14) plié est disposée une entretoise (44) pour la fixation d'un couvercle de module ou d'un dispositif d'affichage et/ou de saisie (46).

4. Module airbag pour conducteur selon l'une des revendications précédentes, **caractérisé en ce que** la section d'ouverture (26) de la paroi latérale de boîtier (24) est réalisée sous forme de volet pivotant (28), en particulier pour lequel le volet (28) est monté pivotant du côté de la paroi arrière de boîtier et est mobile radialement du côté de la paroi avant de boîtier entre une position de fermeture et une position d'ouverture.

5. Module airbag pour conducteur selon la revendication 4, **caractérisé en ce qu'**un bord du volet (32) côté paroi frontale du boîtier est adjacent à un bord du boîtier (34) côté volet de la paroi frontale du boîtier (20), pour lequel le bord du volet (32) et/ou le bord du boîtier (34) sont arrondis, en particulier pour lequel un rayon d'arrondi est d'au moins 2 mm.

6. Module airbag pour conducteur selon la revendication 4 ou 5, **caractérisé en ce que** le boîtier de module (16) présente une butée (36) pour le volet (28) de la paroi latérale de boîtier (24), pour lequel la butée (36) définit un angle de pivotement maximal (β) du volet (28) dans sa position ouverte.

7. Dispositif de direction pour un véhicule, en particulier un volant de véhicule, comprenant
une section de préhension (38) pour l'actionnement manuel du dispositif de direction (12), qui peut tourner autour d'un axe de direction (A),
une section de moyeu (40), qui est disposée radialement vers l'intérieur de la section de préhension (38), ainsi que
une section de rayons (42) qui relie la section de préhension (38) et la section de moyeu (40),
**caractérisé par** un module airbag pour conducteur (10) selon l'une des revendications 4 à 6, qui est monté sur la partie de moyeu (40) du dispositif de direction (12).

8. Dispositif de direction selon la revendication 7, **caractérisé en ce que** la section de moyeu (40) présente, de manière adjacente à la paroi latérale du boitier (24) du module airbag pour conducteur (10), une paroi de dispositif de direction (48) dans laquelle sont formées des zones d'affaiblissement linéaires (50), lesquelles s'étendent en particulier le long de bords latéraux opposés (52) du volet (28) dans la direction périphérique.

9. Dispositif de direction selon la revendication 7 ou 8, **caractérisé en ce que** le volet pivotant (28) adopte un angle de pivotement maximal (β) dans sa position ouverte et la section de préhension (38) est une couronne périphérique de volant de direction, pour lequel les bords latéraux opposés (52) du volet (28) s'étendent chacun le long d'une droite (54) et l'angle de pivotement maximal (β) est choisi de telle sorte que les deux droites (54) s'étendent à travers la couronne périphérique de volant de direction.
